Europäisches Patentamt

(19) European Patent Office

Office européen des brevets

(11) Publication number: **0 034 131**
A1

# (12) EUROPEAN PATENT APPLICATION

(21) Application number: **81830020.4**

(22) Date of filing: **06.02.81**

(51) Int. Cl.³: **B 65 G 47/26**

(30) Priority: **08.02.80 IT 333180**

(43) Date of publication of application: **19.08.81**
Bulletin 81/33

(84) Designated Contracting States: **BE CH DE FR GB LI NL**

(71) Applicant: **DUGOMRULLI S.r.l., Via Ippolito Nievo, 8, I-40068 Zola Predosa (Bologna) (IT)**

(72) Inventor: **Nipoti, Mario, Via Sabotino, 10, I-40131 Bologna (IT)**

(74) Representative: **LANZONI, Luciano, c/o BUGNION S.p.A. Via Farini, 37, I-41024 Bologna (IT)**

(54) **A driven roller that can be disengaged, particularly for accumulation roller conveyors.**

(57) The roller comprises a gearwheel 1 carried in continuous rotation by a drive unit 2, the said gearwheel being coaxial to the shell 3 of the roller and provided with a central circular face having a central cylindrical section and, at the extremities, two truncated cone shaped sections. At the side of the gearwheel are placed two rings 4 and 5, of truncated cone shaped extension complementary to the aforementioned surfaces, provided internally with a hole 6 of a diameter corresponding to the outside diameter of the shell of the roller, the said rings being placed one opposite the other and provided, at the front, with teeth 7 designed to permit the rings to be latched one to the other in order to rotate in harmony and to move together parallel to their longitudinal axis. One of the said rings is restrained by the outer shell of the roller, while the other is thrust axially under the action of a toroidal, hollow body 8 positioned in between two walls and inflatable with compressed air.

<u>A driven roller that can be disengaged, particularly for</u>
<u>accumulation roller conveyors</u>

In the field of conveyors there are what are known as roller conveyors, namely ones that utilize a number of rollers that rotate around their own axes and define, with their upper generatrices, a sliding surface on which loads of even a considerable weight can be transferred from one station to another. The said rollers can be loose turning or driven.

Roller conveyors can, in the former instance, be constituted on the flat, with the load thrust being supplied manually, or on the slope, with the load thrust provided by gravity. Since, in the second possibility, the rollers are driven by chains or belts that operate gearwheels or pulleys keyed to the said rollers, the load thrust is mechanical.

Insofar as the latter possibility is concerned, it is important to note that when the said conveyors with driven rollers are employed in a processing line where there are a number of operating stations placed one after the other, the conveyor has necessarily to allow there to be a load pause, in the region of the said stations, for operations such as the assembling or dismantling of parts, or for checks to be made, etcetera, and to constantly maintain, at the same time, a successive load borne upstream of the station, ready to be withdrawn or processed, so as to reduce conveyor down-times as much as possible. In order to achieve this it is necessary, upon arrival at each station, that an accumulation of loads be caused, one up against the other, in such a way as to form a "store" from which the first load to be utilized can be withdrawn on each occasion.

Whilst the problem of accumulation is not present in the case of conveyors with loose turning rollers, since it is obviated by the manual or gravity thrust, the question does arise for conveyors with driven rollers and endeavours have been made, using various solutions, to overcome it, the first of which through what are called "friction rollers", which allow the load to be moved up until the time when there is a certain torque reaction over and above which a slippage occurs between the outer shell of the roller, on which the load rests, and the inner shaft provided with a constant rotatory motion.

On these conveyors, the halting of the loads, or rather of the first load, takes place by the said load arriving flush up against a locator member and the rollers concerned undergoing a consequential friction. The notable problem this solution brings about stems from the fact that the loads, because of their going one up against the other, apply to the first load a thrust that corresponds to the sum of the individual thrusts, with damaging results and particularly so when the items conveyed are fragile.

A second method is to utilize driven rollers that can be individually disengaged through the use of mechanical controls actuated by the operator, or more opportunely by the loads themselves, using a clutch with front teeth whose engagement or disengagement is controlled by an operating arm, the rotation of which is governed mechanically by a system of levers actuated by the loads themselves.

One problem that occurs with the use of the said rollers is the difficulty of achieving the contemporaneous engagement of a number of rollers (necessary since with each load, a plurality of rollers placed immediately upstream ceases to be driven, as will be seen in greater detail below).

This is because of the need for the teeth to mesh without resorting to somewhat sophisticated solutions such as the one outlined in Italian Patent Application No. 22717 A/76, which are consequently both complicated and costly.

The essential object of the invention is, therefore, to overcome the aforementioned difficulties by making available a roller for which a method that is extremely simple construction-wise, is operationally highly reliable and does not present the problem of difficulty in contemporaneously engaging a number of rollers, has been excogitated for engaging and disengaging the drive.

A further object of the invention is to permit there to be an engagement between the roller and the gearwheel supplying the drive, with it being possible to determine and constantly adjust the torque value also during operation.

Another object still of the invention is to create an engagement control system which, being pneumatic and not mechanical, enables a plurality, however large, of rollers to be controlled through a simple sensor device that can be actuated by any load independently of its own weight, with limited plant costs.

Yet another object of the invention is to make available a roller in which the changeover from the position of engagement to that of disengagement, once the operating force has been removed, takes place spontaneously, that is to say, without the aid of elastic members of any kind.

These and other objects too are all attained with the invention in question for roller conveyors wherein one or more rollers can be separated from a common drive unit, essential features of the invention being that it comprises:

a gearwheel carried in continuous rotation by the said drive
unit, placed externally and coaxially to the said roller in
the region of one of the extremities thereof, the said gearwheel being provided with one face that has at least one
conical surface section; and at least one ring in integral
rotation with the said shell, wherein there is one conical
surface that corresponds to the said conical surface of the
aforementioned gearwheel; control means being provided to
cause a reciprocal axial movement between the said ring and
the said gearwheel.

In one preferred form, the said control means are constituted by a toroidal, flexible, hollow body, placed in communication with a compressed air plant, positioned circumferentially to the support shaft of the said roller, in bet-
ween two/elements that are perpendicular to the axis of the
roller, the external one being integral with the shaft, and
the internal one in contact with the said ring or with the
said gearwheel.

It is advantageous for the said gearwheel to be coaxial to
the shell, for the circular face to have a central cylindrical section and, at the divergent extremities, two truncated cone shaped sections, and for the roller to comprise
two rings of cylindrical and frustum extension (these frusta
being complementary to the aforementioned truncated cone
shaped sections of the gearwheel), provided internally with
a cylindrical hole of a diameter that corresponds to the
outside diameter of the roller, placed one opposite the
other, and provided, at the front, with a number of teeth
that mesh stably one with the other for the reciprocal axial
travel of the said rings, the first of the said rings being
integral with the shell of the said roller, and the second
one subjected to the said control means.

Further characteristics and advantages of the invention will emerge more obviously from the detailed description that follows of one preferred form of embodiment illustrated purely as an unlimited example on the accompanying drawings, in which:

Figure 1 shows, in an axial semi-section, the roller according to the invention;

Figure 2 shows, diagrammatically in a perspective view, one detail of the roller in question, or more precisely, of one of the engaging rings;

Figure 3 shows, in a diagrammatic example, a roller conveyor plant wherein the method in question is employed;

Figure 4 shows, in two views in part sectional form, a second detail of the roller in question, that is to say, of the hollow engagement and disengagement control body;

Figures 5 and 6 show, in axial sections, two possible variants to the embodiment according to Figure 1.

With reference to the accompanying figures, shown globally at 11 there is a cylindrical conveyor roller constituted by a supporting shaft 12, fixed to lateral frames 22 in the region of its extremities, around which, through bearings 19, a shell 3 is free to rotate.

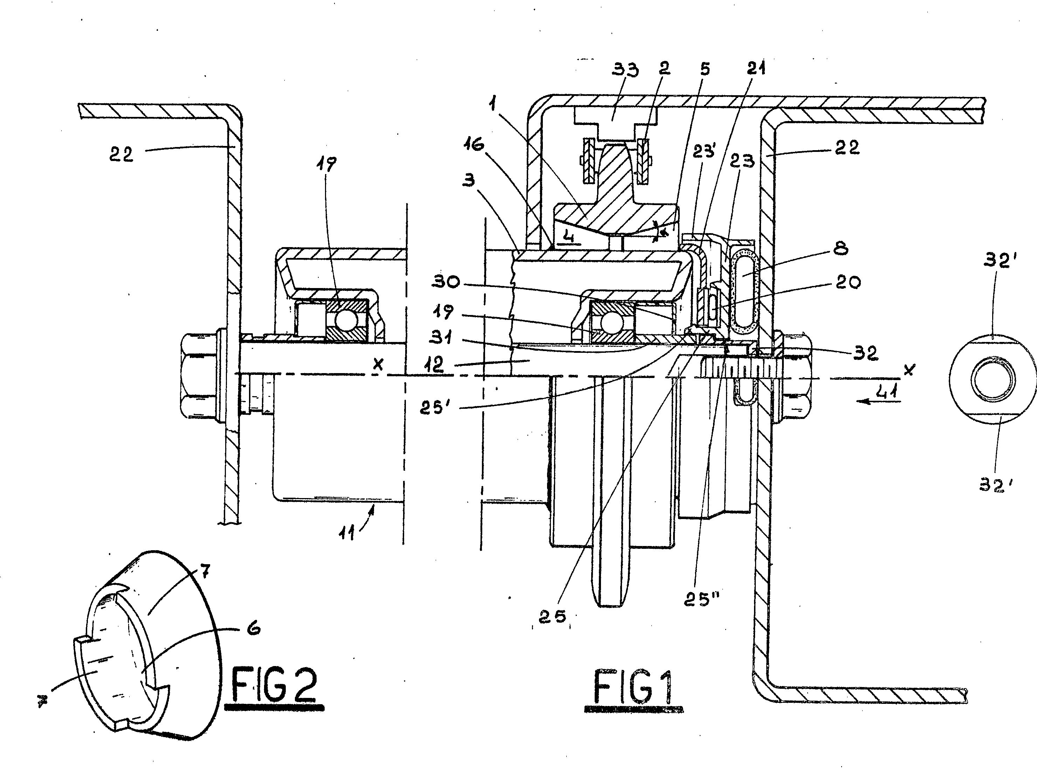

Externally and coaxially to the said shell, at 1 there is a gearwheel with external teeth that mesh with a tangential chain 2, provided with a central circular face that has a cylindrical section in the centre and two truncated cone shaped sections at the divergent extremities. At 4 and 5 there are two rings, one identical with the other (shown in Figure 2), internally provided with a cylindrical hole 6 of dimensions corresponding to the outside diameter of the said shell, and externally of truncated cone shape corresponding to the two internal sections of the gearwheel 1, that is to say, at the same angle $\alpha$ of inclination with respect to the axis x-x of the shaft, and provided, at the front, with two teeth 7 belonging to a cylindrical portion, diametrically opposed and, in the case in question, extending over an angle of 90°, so as to permit head-on engagement of the teeth and, with the meshing persisting, a mutual axial sliding movement. One of the two rings, the one numbered 4 for example, is rendered integral with the shell 3 of the roller (in the case illustrated, by means of a weld 16), while the other ring, namely the one numbered 5, is free to traverse parallel to the axis x-x of the roller despite its continuing to be in integral rotation with the ring 4 because of the aforementioned engagement of the teeth 7.

The said traversing motion is controlled by a toroidal, flexible, hollow body 8, placed in communication with a compressed air plant, positioned circumferentially to the said shaft 12, in between two vertical walls 22 and 23 perpendicular thereto, the former constituting the roller support frame and the latter, via an axial bearing 20, exerting an effect on a thrust member 21 that constitutes the element, actually in contact with the ring 5, that controls the axial traversing motion of this.

This method has been rendered necessary since, when operating normally, the thrust member 21 revolves with the assembly consisting of the gearwheel 1, the rings 4 and 5, and the shell 3, whilst the wall 23 is stationary. The particular conformation 23' in the form of a cover for the wall 23 and the continuation 25 of this to form a tooth 25' has been adopted in order to allow the bearing 20 and the body 8 to be protected, and the assembly of the items 20 - 21 - 23 which can be pre-mounted and handled together.

0034131

At 30 there is a protection cover for the radial bearing 19, and at 31 and 32 there are two distance pieces that may not be fitted or could be of a different conformation, depending on the dimensions of.the supporting shaft 12. At 33 there is a sliding locator block for the chain 2.

The cover 23 also has in it a non-circular hole 25" which pairs with the shape 32' of the distance piece 32, thereby preventing the said cover from rotating.

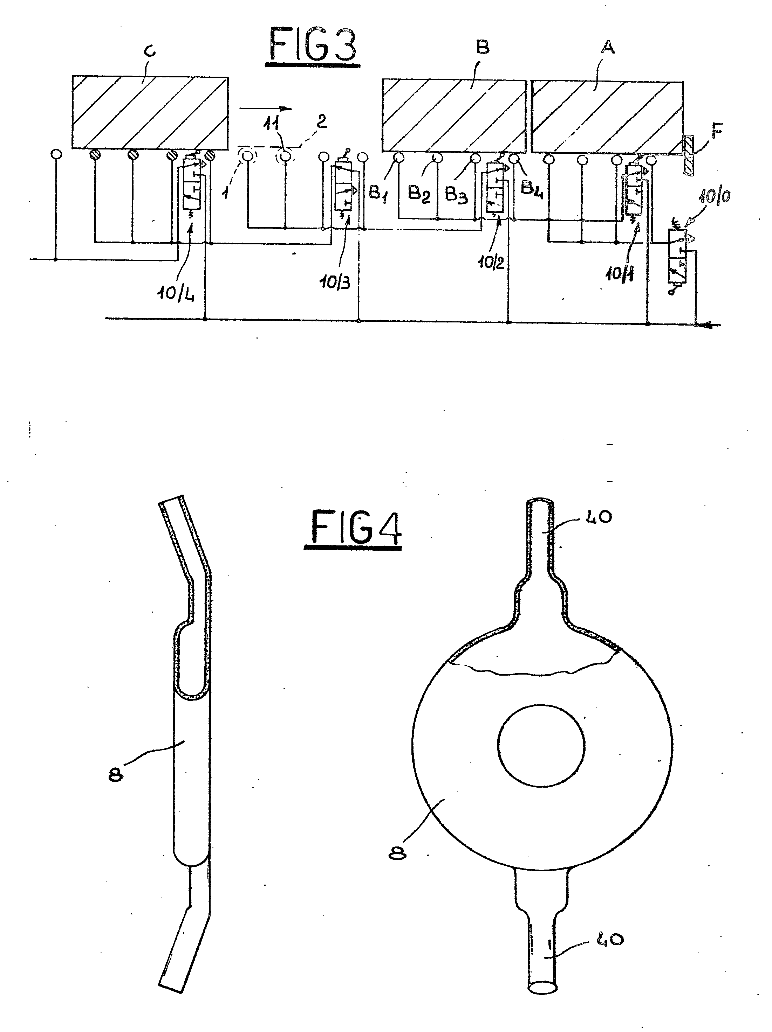

The operation of the roller in question is particularly simple since all that has to be done is to let air under pressure into the inside of the body 8 which, as can be seen in Figure 4 is provided with two ducts 40 for the intake and discharge of the air, and the said body expands axially causing, in this way, the axial displacement of the cover 23-bearing 20-thrust member 21 group, in the direction of the arrow 41, and the last mentioned item to exert its action on the ring 5. Thus the two rings 4 and 5 are made to approach one another and to mesh with the gearwheel 1 which, through frictionand the gearwheel - rings - shell concatenation, is carried in rotation up until the time when the air is removed from the inside of the hollow body 8.

It is important to note that the disengagement between the gearwheel and the rings occurs spontaneously with the cessation of the thrust on the part of the member 21, provided that the aforementioned angle $\alpha$ is always greater than the angle of friction between the said parts, this being dependent on the material used to make them. Advantageously the rings could be metal and the gearwheel nylon which, because of the self-lubricating characteristics of this, would permit a roll with slip of the gearwheel 1 on the cylindrical portion of the rings 4 and 5 under disengagement conditions.

An example is illustrated in Figure 3, of a plant wherein rollers according to the invention that can be disengaged are utilized.

The chain 2 drives the gearwheels 1 which are connected to corresponding rollers 11. The plant is empty and the sensor device of the three-way valves 10 is free; then air coming from the compressor fills the air chamber and keeps the rollers engaged. The subsequent load A moves in the direction of the arrow and trips, as it passes along, the sensor devices of the valves disengaging, each time, the rollers of the station it leaves behind.

After the load A has gone by, the sensor devices rise again and the group of rollers that had been halted, resume their motion.

When the load A arrives up against the limit F, it halts, and the rollers underneath it, which are controlled by the valve 10/0, are halted manually or automatically by the said valve.

Contemporaneously, the load A trips the sensor device of the valve 10/1 and thus the four rollers upstream of A (B1, B2, B3 and B4) are halted.

The load B proceeds in the same way on the guide until it arrives in proximity of the previously mentioned rollers controlled by the valve 10/1, which turn loosely. It carries on, thrust by the rollers connected to the valve 10/2, until it trips, with the front part thereof, the sensor device of the valve 10/2 and also disengages these, after which it continues because of inertia and comes to a halt through friction.

With reference to the speed of the loads on the guide, the positioning of the valves 10 can be varied in such a way that the loads do not knock one against the other but each stop a certain distance away from the one in front.

When the load A is removed, for example using a fork lift truck, or through the manual or automatic operation of the valve 10 which causes the limit F to disappear and thus the load A to exit, the sensor device of the valve 10/1 is freed, and this causes the engagement anew of the rollers connected to it, and the load B to move into the place formerly occupied by the load A. In consequence, the valve 10/2 is freed and the rollers of the station pertinent thereto resume their operation causing a fresh alignment of the loads present on the plant.

It can easily be seen that, with the use of air equipment as the engagement control means, it is possible to utilize extremely sensitive valves 10 that can be actuated by any load with absolute reliability. Furthermore, in comparison with corresponding equipment for mechanically bringing about the engagement and the disengagement of the rollers, compressed air equipment is certainly cheaper and far easier to install.

A further advantage of the method in question is the absolute certainty that the actuating instruction has to be followed by the contemporaneous engagement of all the rollers concerned, there being no teeth that have to mesh but merely a small traversing movement on the part of the ring 5 and the consequential engagement of this, through friction, with the driving gearwheel.

This method enables there to be a play between the thrust exerted by the body 8 and the angle ∝ between the rings and the gearwheel in such a way as to obtain a certain preset drive torque over and above which the slipping occurs between the gearwheel and the rings, even when there is an engagement, and this can be advantageously used for safety purposes.

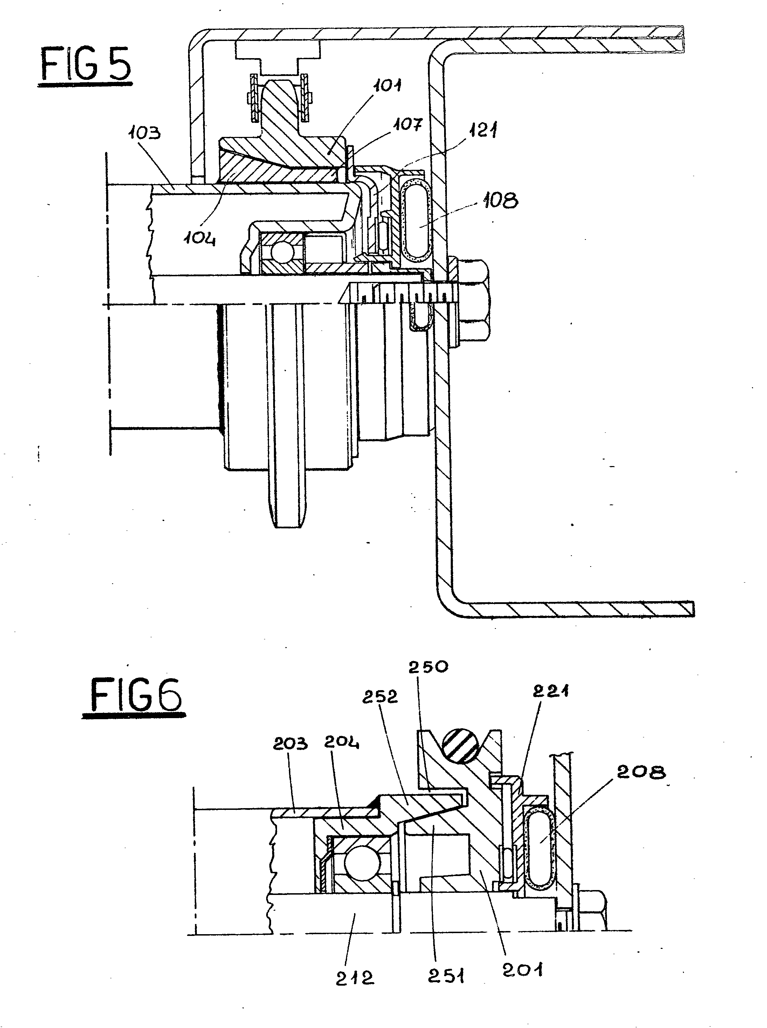

In Figure 5 an alternative form of construction to that depicted in Figure 1 is shown, namely there being one single ring 104, integral with the outer shell 103 of the roller, this also having a front cylindrical portion 107 on which rests, at the time of disengagement, the gearwheel 101, and a truncated cone shaped section complementary to the one corresponding frustum of the gearwheel 101.

The thrust exerted by the body 108 on to the element 121 is, in this case, discharged on to the gearwheel 101, the axial traversing movement of which causes the engagement and the disengagement.

A further possibility is shown in Figure 6 in which the gearwheel 201 is coaxial to and sliding on the shaft 212, and is provided with a face 250 with a truncated cone shaped section 251 that couples, in a complementary fashion, with a corresponding frustum 252 belonging to the ring 204 integral with the outer shell of the roller 203. This is a special form of construction in which the thrust of the body 208 on the element 221 is transmitted on to the gearwheel 201, the axial traversing movement of which brings about the engagement or the disengagement of the roller.

The invention can adopt, in its practical embodiment, also forms that differ from those described above and, in particular, numerous modifications of a practical-constructional nature may be made; for example, the hollow body 8 may
be made with two ducts 40, as illustrated in Figure 4, for
connecting a number of rollers in series to the compressed
air plant, or with one single duct for a parallel connection, just as the gearwheel 1 of each roller may be in the
form of a pulley and be operated by a belt which, together
with all the others, takes its drive from one single longitudinal drive shaft (see Figure 6), and the angle   may adopt the value most suitable, also compatibly with the materials used, without in any way deviating from the framework of protection afforded to the invention.

- 12 -

0034131

Claims:

1. A driven roller that can be disengaged, particularly for accumulation roller conveyors, wherein one or more rollers can be separated from a common drive unit, essential features of the invention being that it comprises: a gearwheel 1 carried in continuous rotation by the said drive unit, placed externally and coaxially to the said roller in the region of one of the extremities thereof, the said gearwheel being provided with one face that has at least one conical surface section; and at least one ring 4 in integral rotation with the said shell, wherein there is one conical surface that corresponds to the said conical surface of the aforementioned gearwheel; control means 8 being provided to cause a reciprocal axial movement between the said ring and the said gearwheel.

2. A driven roller according to the preceding claim, essential features of which are that it comprises: a gearwheel 1 carried in continuous rotation by the said drive unit, placed externally and coaxially to the shell 3 of the said roller in the region of one of the extremities thereof, the said gearwheel being provided with a central circular face having a cylindrical section and at least one conical surface section; and at least one ring provided with a cylindrical hole of a diameter corresponding to the outside diameter of the said shell, and having externally a conical surface corresponding to the said conical surface of the said gearwheel, the said ring being in integral rotation with the said shell; control means being provided to cause a reciprocal axial movement between the said ring and the said gearwheel.

3. A driven roller according to the preceding claim, wherein the said ring is provided with a cylindrical portion 107 that joins with the said conical surface, on which the corresponding cylindrical section of the said gearwheel rests when the control means are disengaged.

4. A driven roller according to Claim 2, wherein the said ring 104 is integral with the said shell, the said control means exerting their effect on the said gearwheel.

5. A roller according to Claim 1, essential features of which are that the said gearwheel has a central circular face provided with a central cylindrical section and, at the extremities, two truncated cone shaped sections, and that the said roller comprises two rings 4 and 5, of a frustum extension complementary to the said surfaces, provided internally with a cylindrical hole of a diameter corresponding to the outside diameter of the shell of the roller, placed one opposite the other, and provided, at the front, with a number of teeth 7 that mesh stably one with the other for the reciprocal axial travel of the said rings, the first of the said rings being integral with the shell of the said roller, and the second one subjected to the said control means.

6. A driven roller according to Claim 1, wherein the said control means are constituted by a toroidal, flexible, hollow body 8, placed in communication with a compressed air plant, positioned circumferentially to the support shaft of the said roller, in between two vertical elements that are perpendicular to the axis of the roller, the external element 22 being integral with the shaft, and the internal element 23 in contact with the said ring or with the said gearwheel.

7. A roller according to Claim 1, wherein there is a gearwheel 201, coaxial to and sliding on the shaft 212, and

- 14 -                                    0034131

provided with a face 250 with a truncated cone shaped section 251 that couples, in a complementary fashion, with a corresponding frustum 252 machined on a ring 204 integral with the outer shell of the roller, the said control means exerting their effect on the said gearwheel.

8. A roller according to Claim 6, wherein the said toroidal, hollow body has at least one duct 40 for linking the said body to the said compressed air plant.

9. A roller according to Claim 6, essential features of which are that it comprises a cover 23 that extends vertically to the axis of the roller, this being placed in contact, internally with the said hollow body, and in contact, via an axial bearing 20, with the said vertical element 21.

10. A roller according to the preceding claim, wherein the said cover 23 has an axial internal tail piece 25 provided with a locking member 25' for assembling together the said cover, the said bearing 20 and the said vertical element 21.

11. A roller according to the preceding claim, wherein the said cover 23 is provided with a hole 25" of non-circular shape that can be coupled to a corresponding distance piece 32 coaxial to the shaft, or to the shaft itself.

12. A roller according to Claim 9, wherein the said cover 23 has bilaterally an external axial tail piece 23' for covering the said hollow body 8 and the said element 21.

0034131

FIG1

FIG2

003413

# FIG 3

C B A

→ 11 2

1

B₁ B₂ B₃ B₄ F

10/4 10/3 10/2 10/1 10/0

# FIG 4

8

40

8

8

40

0034131

FIG 5

103 101 107 121

104 108

FIG 6

250 252 221 203 204 208

212 251 201

0034131

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | BE - A - 870 482 (J. LAJOT) <br> * Claims 1-3,5-10; figures * <br><br> -- <br><br> FR - A - 2 380 963 (DE GOOD) <br> * Page 8, line 10 - page 10, line 19; figures * <br><br> -- <br><br> US - A - 3 327 837 (G. LOVELL) <br> * Claim 1; figures * <br><br> -- <br><br> CH - A - 480 245 (ROTZINGER) <br> * Column 2, line 18 - column 3, line 28; figures * <br><br> -- <br><br> DE - A - 2 528 569 (MASYC-AG) <br> * Claims 1; figures * <br><br> ---- | 1-4, 6-9,12 <br><br><br> 1,2,4, 6 <br><br><br><br> 1,5,6 <br><br><br><br> 1,5,6 <br><br><br><br> 1,5 | B 65 G 47/26 <br><br><br><br><br><br><br><br><br> TECHNICAL FIELDS SEARCHED (Int. Cl.³) <br><br> B 65 G |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-05-1981 | VAN ROLLEGHEM |